# EUROPÄISCHE PATENTSCHRIFT

(11) **EP 4 086 131 B1**
(45) Veröffentlichungstag und Bekanntmachung des Hinweises auf die Patenterteilung: **18.12.2024**
(21) Anmeldenummer: 21172175.8
(22) Anmeldetag: 04.05.2021
(51) Int. Cl.: B61C 3/02, B60K 6/00, B60L 50/10, B61C 7/04, E01B 29/00

(54) **SCHIENENGEBUNDENES ARBEITSFAHRZEUG MIT SERIELLEM HYBRIDANTRIEB**
RAIL-BOUND WORK VEHICLE WITH A SERIAL HYBRID DRIVE
VÉHICULE DE TRAVAIL SUR RAIL POURVU D'ENTRAINEMENT HYBRIDE SÉRIE

(43) Veröffentlichungstag der Anmeldung: 09.11.2022
(73) Patentinhaber: Windhoff Bahn- und Anlagentechnik GmbH, 48431 Rheine (DE)
(72) Erfinder: LEUPOLD, Andre, 48432 Rheine (DE); EMMERICH, Jaques, 48485 Neuenkirchen (DE)
(74) Vertreter: Patentanwälte Olbricht Buchhold Keulertz

(56) Entgegenhaltungen:
- WO-A1-2017/028942
- WO-A1-2017/050414
- WO-A1-2018/210533

## Beschreibung

Die Erfindung betrifft ein Schienenfahrzeug mit einer Antriebsanordnung nach dem Oberbegriff des Anspruchs 1.

Aus der Praxis sind Schienenfahrzeuge bekannt, die ähnlich, wie dies von PKWs bekannt ist, als Hybridfahrzeuge in der Art ausgestaltet sind, dass sie außer einem Verbrennungsmotor auch einen Elektromotor aufweisen, der wahlweise auf eine Antriebsachse des Fahrzeugs einwirkt, beispielsweise auf dieselbe Antriebsachse wie der Verbrennungsmotor. Die Energie für den Betrieb des Elektromotors wird aus einem elektrischen Energiespeicher bereitgestellt, so dass auch bei abgeschaltetem Verbrennungsmotor das Schienenfahrzeug fahren kann. Eine solche Antriebsanordnung ermöglicht folgende unterschiedliche Antriebs-Betriebsarten:
1. Normalfahrt: Antrieb ausschließlich durch den Verbrennungsmotor
2. Fahrt mit höherer Antriebsleistung ("Boost"): Antrieb durch Verbrennungsmotor, unterstützt durch den zusätzlich eingeschalteten Elektromotor,
3. Lokal emissionsfreie Fahrt: Antrieb ausschließlich durch den Elektromotor, und
4. Bremsen: der Antrieb wird zur Rekuperation elektrischer Energie genutzt, dies erfolgt mittels eines im Antriebsstrang angeordneten Generators oder durch den Betrieb des Elektromotors als Generator.

Aus der WO 2018/210533 A1, die als nächstliegender Stand der Technik angesehen wird, ist ein Schienenfahrzeug zur Durchführung eines Arbeitseinsatzes auf einer Gleisanlage bekannt. Das Schienenfahrzeug umfasst einen Verbrennungsmotor sowie einen Elektromotor. Der Antrieb der Arbeitsgeräte kann mittels des Elektromotors erfolgen, und auch der langsame Fahrantrieb während des Arbeitseinsatzes kann mittels des Elektromotors erfolgen, wobei zur Energieversorgung des Elektromotors ein elektrischer Energiespeicher dient, so dass während des Arbeitseinsatzes der Verbrennungsmotor ausgeschaltet sein kann.

Aus der WO 2017/028942 A1 ist eine Gleisbaumaschine mit einem Verbrennungsmotor bekannt, er durch eine Antriebswelle mechanisch mit einer elektrischen Generator- / Motoreinheit verbunden ist. Diese ist durch eine mechanische Antriebsvorrichtung an eine Hydraulikpumpe angeschlossen. Ein Stromspeicher ist durch eine elektrische Versorgungsleitung mit der Generator-/ Motoreinheit sowie mit den elektrisch beaufschlagbaren Antrieben verbunden. Dadurch können diverse Antriebe auf der Gleisbaumaschine hauptsächlich elektrisch versorgt werden. Soweit hydraulische Antriebe erforderlich sind, können die notwendigen Hydraulikpumpen über die vom Stromspeicher gespeiste Generator- / Motoreinheit angetrieben werden.

Aus der WO 2017/050414 A1 ist eine Gleisbaumaschine mit autonomer und redundanter Energieversorgung bekannt. Die Gleisbaumaschine weist verschiedene Arbeitsaggregaten auf sowie einen Verbrennungsmotor, der über eine Kupplung mit einem Verteilergetriebe verbindbar ist. An diesem sind Hydraulikpumpen zur Versorgung diverser hydraulischer Antriebe eines Hydrauliksystems angeschlossen, wobei zur permanenten Energieversorgung der Arbeitsaggregate und Antriebe als alternativer Antrieb des Verteilergetriebes ein Elektromotor vorgesehen ist. Der Elektromotor ist gekoppelt mit einem Zwischenkreis, der mittels eines höhenverstellbaren, an eine Oberleitung des Gleises anlegbaren Stromabnehmers mit elektrischer Energie versorgt werden kann. Zur alternativen Energieversorgung des Zwischenkreises ist ein Generator oder ein elektrischer Energiespeicher vorgesehen. Im Falle einer vorhandenen Gleisoberleitung kann diese somit zur Energieversorgung genutzt werden. Der Erfindung liegt die Aufgabe zugrunde, eine gattungsgemäße Antriebsanordnung dahingehend zu verbessern, dass nicht nur die Fahrt selbst, sondern auch ein Arbeitsgerät des Schienenfahrzeugs lokal emissionsfrei betrieben werden kann, und dass wahlweise der Fahrbetrieb mit erhöhter Leistung erfolgen kann.

Diese Aufgabe wird gelöst durch ein Schienenfahrzeug mit einer Antriebsanordnung nach Anspruch 1. Vorteilhafte Ausgestaltungen sind in den Unteransprüchen beschrieben.

Die Erfindung schlägt mit anderen Worten vor, dass das Schienenfahrzeug als schienengebundene Arbeitsmaschine ausgestaltet ist, also ein Arbeitsgerät aufweist. Es kann sich dabei in an sich bekannter Weise z. B. um ein Arbeitsgerät in Form eines Krans oder einer Hubarbeitsbühne handeln, zum Schneiden von Grünzeug bzw. Bäumen, oder dergleichen. Das Arbeitsgerät ist hydraulisch angetrieben, so dass die schienengebundene Arbeitsmaschine zu diesem Zweck eine Hydraulikpumpe aufweist. Erfindungsgemäß ist vorgesehen, dass der Elektromotor die Hydraulikpumpe antreiben kann, also kraftübertragungsmäßig mit der Hydraulikpumpe verbunden werden kann, beispielsweise mittels einer Kupplung. Dementsprechend kann das Arbeitsgerät mittels des Hydraulikmotors angetrieben werden, auch wenn der Verbrennungsmotor abgeschaltet ist.

Auf diese Weise ist es möglich, das Arbeitsgerät erstens lokal emissionsfrei zu betreiben. Dies kann beispielsweise vorteilhaft sein, wenn in vergleichsweise engen Häuserschluchten von Städten, und beispielsweise im Sommer, wenn in vielen Häusern die Fenster geöffnet sind, Arbeiten durchgeführt werden sollen, bei denen die schienengebundene Arbeitsmaschine über einen längeren Zeitraum an derselben Stelle verbleibt oder sich nur mit einer geringen Geschwindigkeit entlang des Gleises bewegt. Dabei ist zu berücksichtigen, dass für den Antrieb des Arbeitsgeräts der Verbrennungsmotor typischerweise zwar nicht mit Höchstdrehzahl, aber mit deutlich erhöhter Leerlaufdrehzahl laufen muss. Die Beeinträchtigungen für Außenstehende, die mit der Durchführung der Arbeiten und mit dem Einsatz des Arbeitsgeräts unvermeidlich sind, können daher durch die erfindungsgemäße Ausgestaltung der Antriebsanordnung erheblich gemindert werden, indem der Antriebsmotor abgeschaltet werden kann und die Hydraulikpumpe für das Arbeitsgerät ausschließlich elektrisch angetrieben wird. Und für das Personal der schienengebundenen Arbeitsmaschine, welches sich stets in unmittelbarer Nähe der Antriebsanordnung und damit des Verbrennungsmotors aufhält, ist die Entlastung von Abgasen des Verbrennungsmotors ohnehin stets vorteilhaft, unabhängig davon, ob die Arbeiten in einem städtischen Umfeld oder auf freier Strecke durchgeführt werden.

Zweitens wird nicht nur der lokale Ausstoß von Abgasen vermieden, sondern auch Schallemissionen können erheblich reduziert werden, da der Verbrennungsmotor für den Betrieb des Arbeitsgeräts nicht erforderlich ist und daher abgeschaltet sein kann. Dieser Vorteil kommt nicht nur Außenstehenden in der näheren Umgebung zugute, sondern insbesondere auch dem Personal der schienengebundenen Arbeitsmaschine selbst zugute, welches sich typischerweise den ganzen Arbeitstag über in unmittelbarer Nähe des Arbeitsgeräts und der Antriebsanordnung aufhält.

Mit dem erfindungsgemäß ausgestalteten Schienenfahrzeug können daher
- an den Elektromotor angeschlossenen Nebenverbraucher angetrieben werden, also Verbraucher, die nicht als Fahrantrieb des Schienenfahrzeugs dienen,
- Arbeitsfahrten ohne laufenden Verbrennungsmotor durchgeführt werden, wobei der Elektromotor zum Antrieb des jeweiligen Arbeitsgeräts und auch als Fahrantrieb des Schienenfahrzeugs genutzt werden kann, und
- Streckenfahrten durchgeführt werden, bei denen wahlweise der Verbrennungsmotor allein oder mit zusätzlicher Unterstützung durch den Elektromotor für den Fahrantrieb des Schienenfahrzeugs genutzt werden kann.

Vorteilhaft kann das Schienenfahrzeug ein hydraulisches Pumpenverteilergetriebe ("PVG") aufweisen, welches mehrere Wellenanschlüsse aufweist, um Drehzahlen bzw. Drehmomente in das PVG einleiten oder von dem PVG abnehmen zu können. Derartige Pumpenverteilergetriebe sind typischerweise keine Sonderkonstruktionen oder Einzelanfertigung, die für die jeweilige schienengebundene Arbeitsmaschine eigens konstruiert und angefertigt werden, sondern es handelt sich um standardisierte Zukaufteile. In Fällen, wo nicht sämtliche Wellenanschlüsse des PVG belegt sind, kann daher eine vorhandene, gattungsgemäße Antriebsanordnung mit einfachen Mitteln erfindungsgemäß ausgestaltet werden, indem eine von dem Elektromotor angetriebene Welle an einen nicht genutzten Wellenanschluss des PVG angeschlossen wird.

Besonders vorteilhaft kann in einem solchen Fall vorgesehen sein, dass das PVG eine SAE-Schnittstelle aufweist, an welche die von dem Elektromotor angetriebene Welle angeschlossen ist. Bei derartigen Schnittstellen handelt es sich um eine standardisierte Ausgestaltung eines Wellenanschlusses, so dass dementsprechend mit einem möglichst geringem konstruktiven Anpassungsaufwand ermöglicht wird, nachträglich einen Elektromotor in die Antriebsanordnung einer schienengebundenen Arbeitsmaschine einzubinden, um diese Antriebsanordnung erfindungsgemäß auszugestalten.

Ein Ausführungsbeispiel der Erfindung wird anhand der rein schematischen Darstellung nachfolgend näher erläutert.

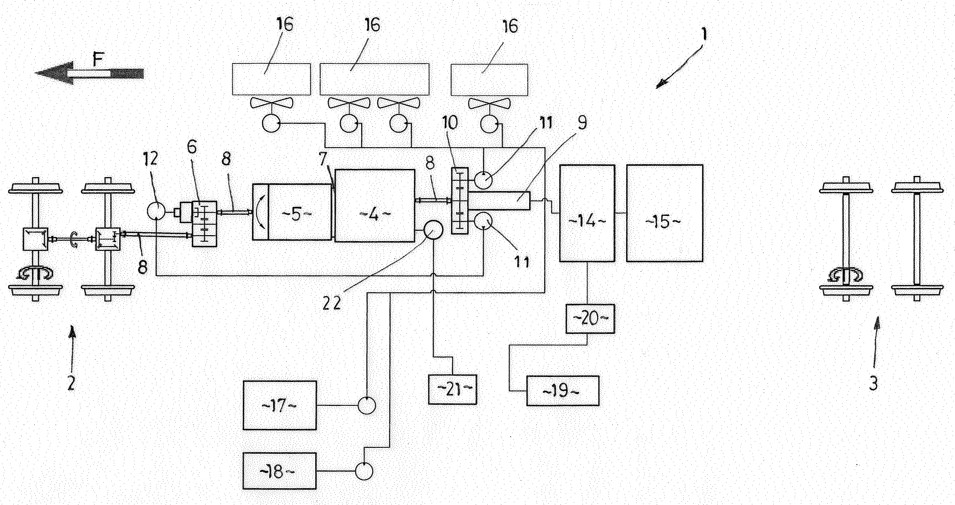

In der einzigen Zeichnung ist in Art eines Blockschaltbilds eine Antriebsanordnung 1 eines Schienenfahrzeugs dargestellt. Die Vorwärts-Fahrtrichtung ist, wie durch den Pfeil F angedeutet, von rechts nach links vorgesehen. Dementsprechend weist die Antriebsanordnung 1 ein vorderes, angetriebenes Triebdrehgestell 2 auf und ein hinteres, nicht angetriebenes Laufdrehgestell 3. Zwischen diesen beiden Drehgestellen ist ein Verbrennungsmotor 4 angeordnet, der beispielsweise als Turbo-Dieselmotor mit einer Antriebsleistung von etwa 400 oder 500 KW ausgestaltet sein kann. Über ein Getriebe 5 und ein mit einem VorgelegeGetriebe ausgestattetes Zwischengetriebe 6 sind die beiden Achsen des vorderen Triebdrehgestells 2 angetrieben.

Um die Kraftübertragung wahlweise unterbrechen zu können, ist eine Kupplung 7 zwischen dem Verbrennungsmotor 4 und dem Getriebe 5 angeordnet ist. Antriebswellen 8 dienen der Kraftübertragung zum Zwischengetriebe 6 und von dort zu den beiden Achsen des Triebdrehgestells 2. In der sogenannten Normalfahrt oder Streckenfahrt, die eine erste Betriebsart der Antriebsanordnung 1 darstellt, dient ausschließlich der Verbrennungsmotor 4 zum Antrieb des Schienenfahrzeugs.

In einer als "Boost Mode" bezeichneten zweiten Betriebsart der Antriebsanordnung 1, nämlich als Fahrantrieb mit erhöhter Antriebsleistung, wird dem Verbrennungsmotor 4 ein Elektromotor 9 zugeschaltet, der über ein kurz als PVG bezeichnetes Pumpenverteilergetriebe 10 wahlweise verschiedene Hydraulikpumpen 11 antreiben kann. Das PVG 10 enthält, wie in der Zeichnung schematisch angedeutet ist, mehrere Kupplungen, um den jeweiligen Kraftfluss wahlweise an unterschiedliche Anschlüsse übertragen zu können. Auch dieser Fahrantrieb wird für Streckenfahrten genutzt, im Unterschied zur Normalfahrt wird allerdings im "Boost Mode" die erhöhte Antriebsleistung zur Verfügung gestellt. Der Kraftfluss im "Boost Mode" läuft vom Elektromotor 9 über das PVG 10, die in der Zeichnung unten dargestellte Hydraulikpumpe 11 zu einem vorderen Hydraulikmotor 12, der an das Zwischengetriebe 6 angeschlossen ist und die Antriebsleistung des Elektromotors 9 in das Zwischengetriebe 6 einleitet, das auch durch den Verbrennungsmotor 4 angetrieben wird. Somit unterstützt der Elektromotor 9 den Verbrennungsmotor und wirkt ebenfalls auf die beiden Achsen des Triebdrehgestells 2 ein.

In einer dritten, als Rekuperation bezeichneten Betriebsart der Antriebsanordnung 1 erfolgt der Kraftfluss vom Verbrennungsmotor 4 über eine Antriebswelle 8 zum PVG 10, also in Richtung des Elektromotors 9, so dass beispielsweise der Elektromotor 9 als Generator betrieben werden kann oder anstelle des Elektromotors 9 ein elektrischer Generator angetrieben wird. In beiden Fällen wird durch die Rekuperation elektrische Energie erzeugt und eine Bremswirkung des Schienenfahrzeugs unterstützt, die beispielsweise durch die Bremswirkung des Verbrennungsmotors 4 und / oder die Betriebsbremse des Schienenfahrzeugs aufgebracht wird. Die gewonnene elektrische Energie wird mittels eines Umrichters 14 in Gleichstrom umgewandelt und in einer Batterie 15 gespeichert.

Das PVG 10 ermöglicht aber auch, den Kraftfluss, der entweder vom Verbrennungsmotor 4 und der Antriebswelle 8 oder vom Elektromotor 9 zum PVG 10 fließt, wahlweise zu einer in der Zeichnung oben dargestellten Hydraulikpumpe 11 zu übertragen. Diese dient zum Antrieb mehrerer Kühlerlüfter 16, die jeweils einen eigenen Hydraulikmotor aufweisen und beispielsweise die für den Verbrennungsmotor 4 vorgesehene Ladeluft, den Verbrennungsmotor 4 selbst und dessen Getriebe, und / oder das Hydrauliköl im Hydraulikkreislauf des Schienenfahrzeugs kühlen.

In einer vierten Betriebsart der Antriebsanordnung 1 ist der Verbrennungsmotor 4 abgeschaltet. Der Elektromotor 9 treibt über das PVG 10 die in der Zeichnung oben dargestellte Hydraulikpumpe 11 an, die nicht nur die erwähnten Hydraulikmotoren der Kühlerlüfter 16 antreiben kann, sondern auch wahlweise einen oder beide Hydraulikmotoren, die zum Antrieb eines Arbeitsgeräts 17, z. B. eines Krans, einer Arbeitsbühne oder dergleichen, und / oder zum Antrieb eines Druckluftkompressors 18 dienen und in der Zeichnung jeweils rechts neben dem Arbeitsgerät 17 bzw. dem Druckluftkompressor 18 dargestellt sind. Das Arbeitsgerät 17 und der Druckluftkompressor 18 sind als Beispiele für Nebenverbraucher erwähnt, also von Verbrauchern, die nicht als Fahrantrieb des Schienenfahrzeugs dienen. Andere und / oder zusätzliche als die genannten Nebenverbraucher können abweichend von dem dargestellten Ausführungsbeispiel vorgesehen sein.

Die Batterie 15 dient in dieser vierten Betriebsart dazu, die elektrische Energie für den Betrieb des Elektromotors 9 bereitzustellen. Um bei Durchführung der Arbeiten das Hydraulikfluid zu kühlen, kann über die in der Zeichnung oben dargestellte Hydraulikpumpe 11 auch derjenige der drei dargestellten Kühlerlüfter 16 angetrieben werden, der das Hydrauliköl im Hydraulikkreislauf des Schienenfahrzeugs kühlt.

In einer fünften Betriebsart der Antriebsanordnung 1 kann der Elektromotor 9 als alleiniger Fahrantrieb des Schienenfahrzeugs genutzt werden, z. B. zur Durchführung besonders leiser sowie emissionsfreier Fahrten bei ausgeschaltetem Arbeitsgerät 17.

Die vierte und fünfte Betriebsart können in Kombination genutzt werden, so dass der Elektromotor 9 bei der Durchführung von so genannten Arbeitsfahrten sowohl als alleiniger Fahrantrieb des Schienenfahrzeugs als auch zum Antrieb des Arbeitsgeräts 17 und ggf. weiterer Nebenverbraucher genutzt wird.

Die Batterie 15 kann auch dazu dienen, ein elektrisches Bordnetz 19 des Schienenfahrzeugs zu versorgen. In diesem Fall wird der aus der Batterie 15 entnommene Gleichstrom mittels des Umrichter 14 in Wechselstrom gewandelt und mittels eines Transformators 20 auf die gewünschte Betriebsspannung des Bordnetzes, z.B. 230 V oder 400 V transformiert.

In der Zeichnung ist eine Batterie dargestellt, die zur Unterscheidung von der Batterie 15, die auch für den Fahrantrieb des Schienenfahrzeugs genutzt werden kann, eine deutlich geringere Kapazität aufweist und als Starterbatterie 21 bezeichnet ist. Sie dient für den Start des Verbrennungsmotors 4, nämlich zum Antrieb eines elektrischen Anlassers. Über eine Lichtmaschine 22 wird die Starterbatterie 21 bei laufendem Verbrennungsmotor 4 geladen.

### Bezugszeichen:

- 1: Antriebsanordnung
- 2: Triebdrehgestell
- 3: Laufdrehgestell
- 4: Verbrennungsmotor
- 5: Getriebe
- 6: Zwischengetriebe
- 7: Kupplung
- 8: Antriebswelle
- 9: Elektromotor
- 10: Pumpenverteilergetriebe (PVG)
- 11: Hydraulikpumpe
- 12: Hydraulikmotor
- 14: Umrichter
- 15: Batterie
- 16: Kühlerlüfter
- 17: Arbeitsgerät
- 18: Druckluftkompressor
- 19: Elektrisches Bordnetz
- 20: Transformator
- 21: Starterbatterie
- 22: Lichtmaschine

## Patentansprüche

1. Schienenfahrzeug mit einer Antriebsanordnung (1), wobei die Antriebsanordnung (1) einen Verbrennungsmotor (4) aufweist,
der über ein zwischengeschaltetes Getriebe (5) auf wenigstens eine Antriebachse des Schienenfahrzeugs einwirkt,
und mit einem Elektromotor (9), der wahlweise auf eine Antriebsachse des Schienenfahrzeugs einwirkend einschaltbar ist,
wobei dem Elektromotor (9) ein elektrischer Energiespeicher zugeordnet ist, derart, dass der Elektromotor (9) bei abgeschaltetem Verbrennungsmotor (4) betreibbar ist, wobei das Schienenfahrzeug als schienengebundene Arbeitsmaschine ausgestaltet ist,
ein hydraulisch angetriebenes Arbeitsgerät (17) aufweist, sowie eine motorisch angetriebene Hydraulikpumpe (11),
**dadurch gekennzeichnet, dass** der Elektromotor (9) kraftübertragungsmäßig mit der Hydraulikpumpe (11) verbindbar ist, derart, dass das Arbeitsgerät (17) bei abgeschaltetem Verbrennungsmotor (4) mittels des Elektromotors (9) betreibbar ist,
und dass der Elektromotor (9) dem Verbrennungsmotor (4), in einer als "Boost Mode" bezeichneten Betriebsart als Fahrantrieb mit erhöhter Antriebsleistung zuschaltbar ist.

2. Schienenfahrzeug nach Anspruch 1,
**dadurch gekennzeichnet,**
**dass** das Schienenfahrzeug ein hydraulisches, kurz als PVG bezeichnetes Pumpenverteilergetriebe (10) aufweist, welches mehrere Wellenanschlüsse aufweist,
und **dass** eine vom Elektromotor (9) angetriebene Welle mit einem Wellenanschluss des PVG (10) verbunden ist, wobei der Elektromotor (9) über das PVG (10) wahlweise verschiedene Hydraulikpumpen (11) antreiben kann, von denen eine Hydraulikpumpe (11) einen Hydraulikmotor (12) antreibt, der an ein Getriebe angeschlossen ist, das auch durch den Verbrennungsmotor (4) angetrieben wird.

3. Schienenfahrzeug nach Anspruch 2, **dadurch gekennzeichnet,**
**dass** das Pumpenverteilergetriebe (10) eine SAE-Schnittstelle aufweist, an welche die vom Elektromotor (9) angetriebene Welle angeschlossen ist.

## Claims

1. Rail vehicle having a drive assembly (1), wherein the drive assembly (1) has an internal combustion engine (4) which by way of an intervening transmission (5) acts on at least one drive axle of the rail vehicle, and having an electric motor (9) which is able to be selectively switched on so as to act on a drive axle of the rail vehicle; wherein the electric motor (9) is assigned an electric energy storage device in such a manner that the electric motor (9) is able to be operated when the internal combustion engine (4) is switched off; wherein the rail vehicle is designed as a rail-bound working machine, and has hydraulically-driven working equipment and a motor-driven hydraulic pump (11),
**characterized in that**
the electric motor (9) in terms of force transmission is connectable to the hydraulic pump (11) in such a manner that the working equipment (17) in the case of a switched-off internal combustion engine (4) is able to be operated by means of the electric motor (9), and **in that** the electric motor (9), in an operating mode referred to as "boost mode", is able to be switched on in addition to the internal combustion engine (4) as a propulsion drive with an increased drive output.

2. Rail vehicle according to Claim 1,
**characterized in that**
the rail vehicle has a pump distributor gear mechanism (10), abbreviated as PVG, which has a plurality of shaft connectors, and **in that** a shaft driven by the electric motor (9) is connected to a shaft connector of the PVG (10), wherein the electric motor (9) by way of the PVG (10) can selectively drive different hydraulic pumps (11), one of the latter driving a hydraulic pump (11) of a hydraulic motor (12) which is connected to a transmission that is also driven by the internal combustion engine (4).

3. Rail vehicle according to Claim 2,
**characterized in that**
the pump distributor gear mechanism (10) has a SAE interface to which the shaft driven by the electric motor (9) is connected.

## Revendications

1. Véhicule ferroviaire avec un agencement d'entraînement (1), l'agencement d'entraînement (1) présentant un moteur à combustion interne (4),
qui agit sur au moins un axe d'entraînement du véhicule ferroviaire par l'intermédiaire d'une transmission (5) intercalée,
et avec un moteur électrique (9) qui peut être mis en marche au choix en agissant sur un axe d'entraînement du véhicule ferroviaire,
un accumulateur d'énergie électrique étant associé au moteur électrique (9) de telle sorte que le moteur électrique (9) peut être actionné lorsque le moteur à combustion interne (4) est arrêté, le véhicule ferroviaire étant conçu sous forme de machine de travail sur rails,
présentant un appareil de travail (17) à entraînement hydraulique, ainsi qu'une pompe hydraulique (11) à entraînement motorisé,
**caractérisé en ce que**
le moteur électrique (9) peut être relié à la pompe hydraulique (11) par transmission de force, de telle sorte que l'appareil de travail (17) peut être actionné au moyen du moteur électrique (9) lorsque le moteur à combustion interne (4) est arrêté,
et
**en ce que** le moteur électrique (9) peut être connecté au moteur à combustion interne (4) dans un mode de fonctionnement appelé « mode boost » en tant qu'entraînement de conduite avec une puissance d'entraînement accrue.

2. Véhicule ferroviaire selon la revendication 1, **caractérisé en ce que**
le véhicule ferroviaire présente une boîte de distribution de pompes hydrauliques (10), désignée en abrégé par PVG, présente plusieurs raccords d'arbre,
et **en ce qu'**un arbre entraîné par le moteur électrique (9) est relié à un raccord d'arbre de la PVG (10),
le moteur électrique (9) pouvant entraîner au choix différentes pompes hydrauliques (11) par l'intermédiaire de la PVG (10),
dont une pompe hydraulique (11) entraîne un moteur hydraulique (12) qui est raccordé à une transmission qui est également entraînée par le moteur à combustion interne (4).

3. Véhicule ferroviaire selon la revendication 2, **caractérisé en ce que**
la boîte de distribution de pompe (10) présente une interface SAE à laquelle est raccordé l'arbre entraîné par le moteur électrique (9).
